# EUROPÄISCHE PATENTSCHRIFT

(11) **EP 0 467 013 B1**
(45) Veröffentlichungstag und Bekanntmachung des Hinweises auf die Patenterteilung: **28.09.1994**
(21) Anmeldenummer: 91102886.8
(22) Anmeldetag: 28.02.1991
(51) Int. Cl.: A47J 31/02

(54) **Teefiltervorrichtung mit einem elastisch verformbaren Halter**
Tea bag holding device with an elastical support ring
Appareil pour fixer des sachets de thé avec un anneau de support élastique

(30) Priorität: 26.06.1990 DE 9007089 U
(43) Veröffentlichungstag der Anmeldung: 22.01.1992
(73) Patentinhaber: Melitta Haushaltsprodukte GmbH & Co. Kommanditgesellschaft, D-32371 Minden (DE)
(72) Erfinder: Halm, Hans, D-4690 Herne 1 (DE)
(74) Vertreter: Stracke, Alexander, Dipl.-Ing.

(56) Entgegenhaltungen:
- WO-A-79/00289
- DE-A- 2 136 580
- DE-U- 8 516 411
- DE-U- 8 906 666

## Beschreibung

Die vorliegende Erfindung betrifft eine Teefiltervorrichtung mit einem elastisch verformbaren Halter in Form eines geschlossenen Ringes, der zwei sich gegenüberliegende Spannsegmente zum Festsetzen und Freigeben eines Papierfilterbeutels trägt.

Eine Teefiltervorrichtung dieser Art ist aus der WO-A-7 900 289, Ausführungsbeispiel gemäß Figur 4, bekannt.

In der vorerwähnten Druckschrift heißt es unter Bezugnahme auf diese Figur 4, daß "der Halter aus einem Stutzen mit Schlitzen besteht, wobei der zylinderförmig oder leicht konisch ausgestaltete Stutzen an seinem unteren Ende sich gegenüberliegende Flächen aufweist, die einen Keil- bzw. schneidenartigen Endbereich bilden".

Weiterhin heißt es, daß "der Stutzen in einen Flansch ausläuft, der die Form eines in sich geschlossenen Ringes hat und daß sich die Schlitze im nach unten weisenden Rand des Flansches fortsetzen".

Daraus ergibt sich gemäß der vorerwähnten Literaturstelle, daß "durch Gegeneinanderdrücken von Druckstücken eines etwa hohlringförmigen Flansches der bereits schmale Öffnungsquerschnitt im unteren Bereich des Stutzens noch weiter verringert werden kann, so daß der Stutzen des Halters leicht in eine als Flachbeutel hergestellte Filtertüte eingeführt werden kann".

Dies bedeutet, daß zwar die unteren Enden der Spannsegmente zusammenstoßen können, daß aber im oberen Bereich ihr Umfang unwesentlich verändert wird.

Aus der DE-U- 8 516 411 ist eine Vorrichtung zur Halterung von Filtertüten bekannt, die eine etwa als zangenförmig zu bezeichnende Konstruktion aufweist. Der eigentliche Halter für einen Papierfilterbeutel weist dabei aber nicht die Form eines geschlossenen Ringes auf.

Aus der DE-U-8 906 666 ist eine elektrische Maschine zur Zubereitung von Kaffee oder Tee bekannt, deren Besonderheit darin besteht, daß auf eine Kanne eine Tasse und auf diese Tasse wiederum ein Filtergehäuse mit Dauerfiltereinsatz aufsetzbar ist. Diese Gestaltung dient dazu, eine Kaffee- oder Teemaschine auch dann sinnvoll nutzen zu können, wenn lediglich das Aufbrühen einer Tasse eines bestimmten Getränkes gewünscht wird.

Der vorliegenden Erfindung liegt die Aufgabe zugrunde, eine Teefiltervorrichtung der gattungsgemäßen Art so zu gestalten, daß das Aufschieben, Festsetzen und Freigeben eines Filterbeutels erleichtert und damit das Handling der gesamten Vorrichtung verbessert wird.

Diese Aufgabe wird erfindungsgemäß dadurch gelöst, daß der Ring oval verformbar ist und die beiden Spannsegmente derart an dem Ring angebracht sind, daß sie parallel zueinander beweglich sind.

Von besonderem Vorteil ist dabei, daß der durch Fingerkraft oval verformbare Ring, an dem die Spannsegmente angebracht sind, es ermöglicht, sie in ihrer gesamten Baulänge parallel aneinander anzunähern und bei einer besonders vorteilhaften Ausführungsform sogar den dazwischenliegenden Spalt zur Erleichterung des Aufschiebens eines Beutels, aber auch zum sicheren Festsetzen und einfachen Freigeben, vollständig zu schließen.

Eine weitere bevorzugte Ausführungsform ist gegen Aroma- und Temperaturverlust des Tees mit einem auf die Teefiltervorrichtung aufsetzbaren Deckel versehen, der über senkrecht über den Ringrand hinausragende Laschen auf diesem fixiert werden kann.

Nachfolgend ist eine Ausführungsform der Erfindung anhand der Zeichnungen näher beschrieben.

Es zeigen:

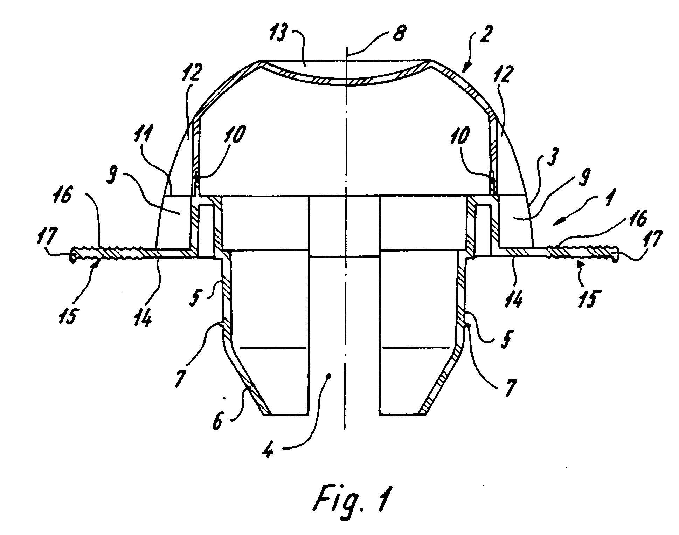

- Figur 1: eine Teefiltervorrichtung mit Halter und aufgesetztem Deckel im Schnitt,

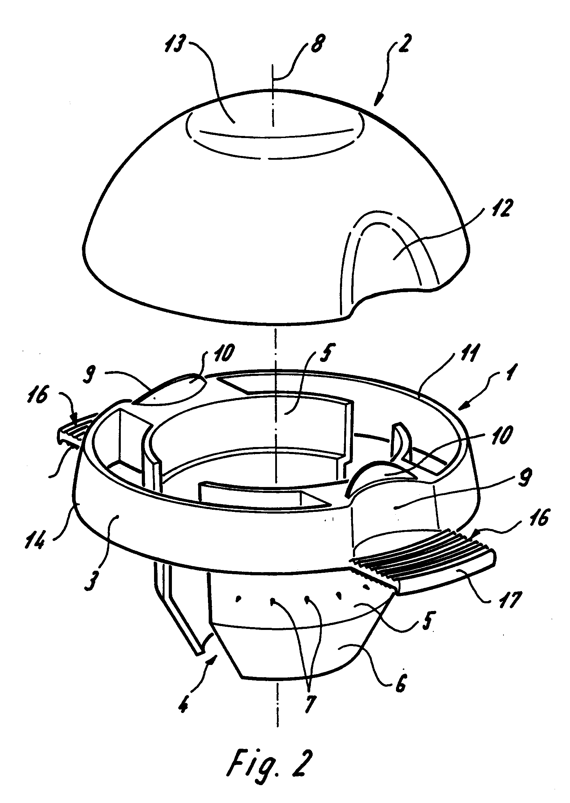

- Figur 2: eine Teefiltervorrichtung in perspektivischer Darstellung.

Die Teefiltervorrichtung besteht aus einem elastisch verformbarem Halter 1 und einem ihr zugeordneten Deckel 2.

Der Halter 1 besteht aus einem geschlossenen oval verformbarem Ring 3 an dessen Innenseite zwei sich gegenüberliegende, einen parallelen Spalt 4 bildende Spannsegmente 5 zum Festsetzen und Freigeben eines Filterbeutels befestigt sind, die durch die Verformbarkeit des Ringes 3 über Fingerkraft parallel zueinander zu bewegen sind.

Die Spannsegmente 5 sind halbzylinderförmig und zum einfacheren Aufschieben eines Filterbeutels an ihren unteren Enden 6 zum Spalt hin keilförmig abgeflacht oder konzentrisch zulaufend ausgebildet und besitzen zum Fixieren eines Beutels über ihren äußeren Umfang eine Reihe von widerhakenartigen Noppen 7.

Der elastisch oval verformbare Ring 3 weist rechtwinklig zum parallelen Spalt 4 zwischen den Spannsegmenten 5 und zur Mittelachse 8 der Vorrichtung hin orientiert, zwei sich am Ringumfang gegenüberliegende Fingergriffmulden 9 auf, die es ermöglichen, die beiden Spannsegmente 5 derart einander anzunähern, daß die Segmente 5 den Spalt 4 vollständig schließend aneinander anliegen und so eine das Aufschieben eines Teefilterbeutels erleichternde Form herstellbar ist.

Die Rückstellkraft des Ringes 3 stellt nach Entlastung des radialen Fingerdruckes auf die Griffmulden 9 einen Filterbeutel aufspannend und fixierend die ursprüngliche Ringform wieder her.

Den Griffmulden 9 ist jeweils eine, senkrecht über den oberen Rand 11 des elastisch verformbaren Ringes 3 hinausragende, ebenfalls nach innen gewölbte kreisbogenförmige Lasche 10 zugeordnet. Beide Laschen 10 dienen als Führung für den zum Verschließen der Teefiltervorrichtung auf dem oberen Ringrand 11 aufsetzbaren Deckel 2, indem sie diesen an den die Griffmulden 9 des Ringes 3 fortsetzenden Mulden 12 hintergreifen. Weiterhin verbessern die Laschen als Verlängerung der Griffmulden die Handhabung der Teefiltervorrichtung.

Der schüsselförmige Deckel 2 ist an seiner Oberseite mit einer Abflachung 13 versehen, die es ermöglicht, ihn in umgedrehtem Zustand als sicher stehende Auflagerschale für einen benutzten Teefilterbeutel zu nutzen.

An dem unteren Rand 14 des elastisch verformbaren Ringes 3 sind zwei radial sich nach außen erstreckende Auflagerflächen 15 vorgesehen, mit denen die Vorrichtung auf verschiedengroßen Teekannenöffnungen aufsetzbar ist, wobei die Auflagerflächen 15 gegen ein Verrutschen der Vorrichtung auf einem Kannenrand mit Rillen 16 und gegen das völlige Abrutschen der Vorrichtung an ihrem äußeren Rand mit einem nach unten überstehenden Randsteg 17 versehen ist, der als mechanischer Anschlag dient.

## Patentansprüche

1. Teefiltervorrichtung mit einem elastisch verformbaren Halter in Form eines geschlossenen Ringes, der zwei sich gegenüberliegende Spannsegmente zum Festsetzen und freigeben eines Papierfilterbeutels trägt, **dadurch gekennzeichnet,** daß der Ring (3) oval verformbar ist und die beiden Spannsegmente (5) derart an dem Ring (3) angebracht sind, daß sie parallel zueinander beweglich sind.

2. Teefiltervorrichtung nach Anspruch 1, dadurch gekennzeichnet, daß die beiden Spannsegmente (5) den zwischen ihnen liegenden parallelen Spalt (4) vollständig schließend aneinander annäherbar sind.

3. Teefiltervorrichtung nach Anspruch 1 und 2, dadurch gekennzeichnet, daß der elastisch verformbare Ring (3) zur Mittelachse (8) der Vorrichtung orientierte, am Ringumfang sich einander gegenüberliegende Fingergriffmulden (9) aufweist.

4. Teefiltervorrichtung nach einem oder mehreren der vorgenannten Ansprüche, dadurch gekennzeichnet, daß eine jeder Griffmulde (9) zugeordnete Lasche (10) senkrecht über den oberen Rand (11) des elastischen Ringes (3) hinausragt und die Laschen (10) als Führung für einen auf den Ringrand (11) aufsetzbaren Deckel (2) zum Verschließen der Teefiltervorrichtung dienen.

5. Teefiltervorrichtung nach einem oder mehreren der vorgenannten Ansprüche, dadurch gekennzeichnet, daß am unteren Rand (14) des Ringes mindestens eine sich radial nach außen erstreckende Auflagerfläche (15) vorgesehen ist, mit der die Vorrichtung auf verschieden große Teekannenöffnungen aufsetzbar ist.

6. Teefiltervorrichtung nach Anspruch 5, dadurch gekennzeichnet, daß die Auflagerfläche (15) gegen Verrutschen der Vorrichtung auf einem Kannenrand mit Rillen (16) versehen ist.

7. Teefiltervorrichtung nach Anspruch 5, dadurch gekennzeichnet, daß die Auflagerflächen (15) als mechanischen Anschlag gegen ein Abrutschen der Vorrichtung von einem Kannenrand, einen nach unten überstehenden Randsteg (17) aufweist.

## Claims

1. A tea filter device having an elastically deformable holder in the form of a closed ring which bears two mutually oppositely disposed clamping segments for fixing and releasing a paper filter bag characterised in that the ring (3) is ovally deformable and the two clamping segments (5) are so disposed on the ring (3) that they are movable parallel to each other.

2. A tea filter device according to claim 1 characterised in that the two clamping segments (5) can be moved towards each other to completely close the parallel gap (4) between them.

3. A tea filter device according to claim 1 and claim 2 characterised in that the elastically deformable ring (3) has finger grip recesses (9) which are oriented towards the central axis (8) of the device and which are disposed in mutually opposite relationship at the periphery of the ring.

4. A tea filter device according to one or more of the preceding claims characterised in that a tab (10) associated with each grip recess (9) projects perpendicularly above the upper edge (11) of the elastic ring (3) and the tabs (10) serve as a guide for a cover (2) which can be fitted on to the edge (11) of the ring for closing the tea filter device.

5. A tea filter device according to one or more of the preceding claims characterised in that provided at the lower edge (14) of the ring is at least one radially outwardly extending support surface (15) with which the device can be fitted on to teapot openings of different sizes.

6. A tea filter device according to claim 5 characterised in that the support surface (15) is provided with grooves (16) to prevent the device slipping on the edge of a pot.

7. A tea filter device according to claim 5 characterised in that the support surface (15) has a downwardly projecting edge limb portion (17) as a mechanical abutment to prevent the device from slipping off the edge of a pot.

## Revendications

1. Dispositif de filtre à thé avec un support élastiquement déformable sous forme d'un anneau fermé, qui porte deux segments tendeurs qui se font face pour fixer et enlever un sachet de filtre en papier, caractérisé en ce que l'anneau (3) est déformable de façon ovale et que les deux segments tendeurs (5) sont disposés de telle sorte sur l'anneau (3) qu'ils soient déplaçables parallèlement l'un à l'autre.

2. Dispositif de filtre à thé selon la revendication 1, caractérisé en ce qu'on peut rapprocher complètement les deux segments tendeurs (5) de façon à fermer complètement la fente (4) à bords parallèles se trouvant entre eux.

3. Dispositif de filtre à thé selon la revendication 1 et 2, caractérisé en ce que l'anneau (3) élastiquement déformable présente des empreintes de saisie (9) se faisant face sur la périphérie de l'anneau, orientés selon l'axe médian du dispositif (8).

4. Dispositif de filtre à thé selon l'une ou plusieurs des revendications précédentes, caractérisé en ce qu'à chaque empreinte de saisie (9) correspond une patte (10) s'étendant perpendiculairement au-dessus du bord supérieur (11) de l'anneau élastique (3) et les pattes (10) servent de guidage à un couvercle (2) insérable sur le bord annulaire (11) pour obturer le dispositif de filtre à thé.

5. Dispositif de filtre à thé selon l'une ou plusieurs des revendications précédentes, caractérisé en ce que sur le bord (14) inférieur de l'anneau se trouve au moins une surface d'appui (15) s'étendant vers l'extérieur grâce à laquelle on peut placer le dispositif sur des orifices de théière de différentes tailles.

6. Dispositif de filtre à thé selon la revendication 5, caractérisé en ce qu'on munit la surface d'appui (15) de rainures (16) pour empêcher un déplacement du dispositif sur un bord de théière.

7. Dispositif de filtre à thé selon la revendication 5, caractérisé en ce qu'on munit les surfaces d'appui (15) d'un rebord (17) dépassant vers le bas en tant que butée mécanique pour empêcher un basculement complet du dispositif sur un bord de théière.
